# EUROPÄISCHE PATENTSCHRIFT

(11) **EP 3 587 026 B1**
(45) Veröffentlichungstag und Bekanntmachung des Hinweises auf die Patenterteilung: **15.03.2023**
(21) Anmeldenummer: 19178895.9
(22) Anmeldetag: 07.06.2019
(51) Int. Cl.: B23P 19/00, B21J 15/32

(54) **KOMPAKTVEREINZELER**
COMPACT SEPARATOR
DISPOSITIF DE SÉPARATION COMPACT

(30) Priorität: 27.06.2018 DE 102018210473
(43) Veröffentlichungstag der Anmeldung: 01.01.2020
(73) Patentinhaber: Audi AG, 85045 Ingolstadt (DE)
(72) Erfinder: Hornbostel, Norbert, 74388 Talheim (DE); Ebinger, Hannes, 74189 Weinsberg (DE)

(56) Entgegenhaltungen:
- DE-A1-102016 124 694
- JP-A- 2016 055 388

## Beschreibung

Die Erfindung betrifft eine an einem Fügeroboter angeordnete kompakte Vorrichtung zur Bevorratung und Vereinzelung von Fügeelementen nach dem Oberbegriff des Anspruchs 1 und ein Verfahren zum Betreiben der Vorrichtung. Eine solche Vorrichtung und ein Verfahren zum Betreiben dieser Vorrichtung sind aus der DE 10 2016 124694 A1 bekannt.

Aktuell sind industrielle Fügesysteme bekannt, bei denen geordnete, d. h. nacheinander oder übereinander aufgereihte Fügeelemente über eine Kupplung zwischen einer Betankungsstation und der verarbeitenden Fügezange ausgetauscht werden. Bei dieser Art der Übergabe muss eine sehr genaue Verbindung zwischen Betankungsstation und Fügezange geschaffen werden. Hierzu werden häufig Zuführschläuche eingesetzt, die im Hinblick auf Toleranzen schwierig zu fertigen sind (Profilschläuche) und eine Herausforderung für jede Serienfertigung darstellen. Die Transportstrecke der Fügeelemente muss häufig auf <20m begrenzt werden, weil eine geeignete Drucklufteinstellung nicht mehr möglich ist. Weiterhin wird heute sehr viel Druckluftenergie benötigt. Häufig werden Luftleckagen durch komplexe Übergänge an den Profilschlauch-Geometrien beobachtet.

Es wurde bereits ein System vorgeschlagen, in dem die Übergabe der Fügeelemente mit einer einfachen, z. B. trichterförmigen Übergabe erfolgen kann. Der Betankungsvorgang kann hierbei deutlich schneller vorgenommen werden, weil ungeordnete Fügeelemente in größerer Anzahl an der Schnittstelle übergeben werden. Für die Automatisierung können Füllstände und Fehlerquellen (wie z. B. Verstopfungen) durch Sensoren mit der Anlagensteuerung abgefragt werden. Es ergibt sich weiterhin der Vorteil, dass sehr einfach zu fertigende Zuführschläuche, z. B. handelsübliche Rundschläuche verwendet werden können.

Die Fügeelemente, die in einem Zwischenbunker ungeordnet vorliegen, werden in einer automatisierten Roboterfertigung einer Vorrichtung zur Bevorratung und Vereinzelung der Fügeelemente an einem beweglichen Roboter oder einer beweglichen Fügezange übergeben. Hierbei werden die Fügeelemente von einer Befüllstation außerhalb des Schutzkreises ungeordnet in den Schutzkreis, nahe des Roboters in einen Zwischenbunker transportiert oder direkt von der Befüllstation außerhalb des Schutzkreises in die Vorrichtung zur Bevorratung und Vereinzelung am Roboter bzw. der Fügezange zugeführt.

Vereinzelungsmodule für die Verarbeitung von Stanznieten, Schrauben und jeglicher Art von Sonderfügeelementen haben das Ziel, die Fügeelemente aus einem losen Schüttgut in eine geordnete Position zu bringen und dann zur Verarbeitung in die Fügezange zu vereinzeln. In der Regel werden diese Vereinzelungsmodule stationär betrieben. Um die Niete aus dem losen, geordneten Zustand vereinzelt zu bekommen, sind unterschiedliche Möglichkeiten bekannt. Die verbreitetste Lösung ist der sogenannte Abtrennschieber. Hier wird aus einer Strecke von aufgereihten Fügeelementen ("Pufferstrecke") ein Element in eine andere Richtung abgelenkt. Auch eine Lösung mit Drehteller ist bereits bekannt geworden. Dabei fällt ein Nietelement in ein separates Nest und der Drehteller kann daraufhin das Fügeelement in eine andere Richtung bewegen, damit das Element einzeln einer Fügezange zugeführt werden kann.

Aus der CN 203 791 560 U ist eine Nietverteilungsanordnung bekannt, die eine Nietvibrationsscheibe und einen Nietanordnungsmechanismus umfasst, wobei die Nietvibrationsscheibe die Nieten geordnet anordnen und die Niete in einer aufrechten Position ausgeben kann. Der Mechanismus umfasst einen horizontal angeordneten Drehtisch und einen Begrenzungsring, der außerhalb des Drehtischs in einer Umhüllungsweise angeordnet ist. Mindestens zwei Spalte sind in der Kante des Drehtisches in einem Intervall gebildet. Auf dem Begrenzungsring ist ein durch die inneren und äußeren Ringflächen des Begrenzungsringes verlaufender Kanal angeordnet. Die von der Nietschwingscheibe ausgegebenen Nieten treten nacheinander in die Lücken in der Kante des Drehtisches ein, und alle Nieten sind in Intervallen in der Umfangsrichtung des Drehtisches verteilt.

Die DE 10 2005 005 074 A1 offenbart einen Drehteller, der in einer gemeinsamen horizontalen Ebene zwischen mindestens einer Aufbereitungseinrichtung für ausgerichtete Waren und einem Zuführförderer angeordnet ist, über den die Waren auf den Drehteller gebracht und überführt werden können. Waren werden in eine vorbestimmte neue Ausrichtung ausgerichtet, wenn sich der Drehtisch dreht. Die Waren werden dann unter Beibehaltung ihrer Orientierung an die mindestens eine Bereitstellungsvorrichtung zur weiteren Handhabung übergeben. Der Zuführförderer kann ein Rollförderer mit geneigten Rollen zum Ausrichten der Waren an einer der Seitenwände des Förderers sein.

Aus der DE 20 2013 004 099 U1 geht eine Vorrichtung zum Ordnen oder Ausrichten von unregelmäßig anfallenden Schüttgut-Teilen hervor. Die Vorrichtung umfasst einen horizontal angeordneten, mit konstanter Geschwindigkeit angetriebenen Drehteller, dessen Telleroberfläche eine Manipulationsfläche für die Schüttgut-Teile bildet, eine zentrumsnahe Einspeiseeinrichtung zum ungeordneten Aufbringen von Schüttgut-Teilen auf die Manipulationsfläche des Drehtellers, eine an der Peripherie des Drehtellers angeordnete Ausleiteinrichtung für die gezielt manipulierten Schüttgut-Teile, und eine im Wesentlichen spiralförmig zwischen Einspeiseeinrichtung und Ausleiteinrichtung verlaufende Manipulierstrecke auf der Manipulationsfläche, die durch oberhalb der Manipulationsfläche des Drehtellers angeordnete, statische Leitelemente definiert ist, wobei die durch die Drehteller-Bewegung auf der Manipulationsfläche mitgenommenen Schüttgut-Teile durch Wechselwirkung mit den statischen Leitelementen entlang der Manipulierstrecke in ihrer Lage, Ausrichtung und/oder Anzahldichte gezielt beeinflussbar sind

Die DE 20 2016 103 143 U1 offenbart eine Fügeeinheit und Fügeeinrichtung. Die Fügeeinrichtung umfasst einen Roboterarm mit einem Fügewerkzeug und weist eine Lenkeinrichtung und eine Orientierungseinrichtung sowie eine Aufnahmeeinrichtung für über eine Leitung zugeführte Fügeelemente auf.

Die DE 10 2013 009 267 A1 lehrt eine Vorrichtung zum Vereinzeln von Nadeln. Die Vorrichtung sortiert die Nadeln und stellt sie einem Bestücker eines Roboters in einer definierten Position zur Verfügung, wobei die Vorrichtung eine Aufnahme zur Befestigung im Bereich des Bestückers umfasst.

Aus der DE 10 2005 041 534 A1 sind ein Verfahren und eine Vorrichtung zum Zuführen von Verbindungselementen zu einem Verarbeitungsgerät bekannt. Ein Vereinzeler sortiert Befestigungsmittel und leitet diese über eine Pufferleitung zu einem Verbindungswerkzeug an einem Roboterarm.

Vor diesem Hintergrund hat sich die vorliegende Erfindung die Aufgabe gestellt, eine an einem Fügeroboter angeordnete kompakte Vorrichtung zur Verfügung zu stellen, welche gleichzeitig unterschiedliche Arten von Fügeelementen bevorraten und vereinzeln kann und die unterschiedlichen Arten von Fügeelementen nach Bedarf abwechselnd einem Fügewerkzeug des Fügeroboters zur Verfügung stellen kann. Außerdem soll ein Verfahren zum Betreiben der Vorrichtung bereitgestellt werden.

Die Aufgabe wird erfindungsgemäß gelöst durch eine Vorrichtung mit den Merkmalen des Anspruchs 1 und ein Verfahren mit den Merkmalen des Anspruchs 9. Ausgestaltungen und Weiterbildungen der Erfindung ergeben sich aus den abhängigen Ansprüchen.

Die erfindungsgemäße Vorrichtung ("Kompaktvereinzeler") zur Bevorratung und Vereinzelung von Fügeelementen, insbesondere Halbhohlstanznieten, ist am Fügeroboter montiert. Das hat den Vorteil, dass kurze Zuführschläuche eingesetzt werden können, die die Roboterbewegung über alle Achsen nicht mitmachen müssen. Diese können dann wesentlich kürzer sein als die bei stationären Einheiten erforderlichen 20 m, und beispielsweise eine Länge von weniger als 10 m, insbesondere weniger als 5m aufweisen. In einer Ausführungsform beträgt die Länge des Zuführschlauchs maximal 3 m, beispielsweise 2 bis 3 m. Es spart Zuführzeit und Druckluftenergie, weil das Fügeelement nur noch einen kurzen Weg zum Verbauort hat und es spart Wartungskosten, weil der Zuführschlauch ein Verschleißteil ist und somit der Aufwand zum Wechseln reduziert werden kann.

Der erfindungsgemäße Kompaktvereinzeler könnte aber auch als getrennt vom Fügeroboter angeordnete stationäre Einheit betrieben werden. In diesem Fall wäre natürlich ein längerer Zuführschlauch zur Fügezange des Fügeroboters erforderlich.

Der Vorratsbehälter des Kompaktvereinzelers, der am Roboter selbst angeordnet ist, ist in einer vorteilhaften Ausführungsform durch eine automatische Klappenöffnung verschließbar. Der Vorteil ist, dass bei der Bewegung des Roboters keine Niete aus der Öffnung zur Befüllung der Niete herausfallen können und der Kompaktvereinzeler selbst automatisch befüllt werden kann. Konkret bedeutet dies in einer bevorzugten Variante, dass über einen Umlenkhebel ein pneumatischer oder elektrischer Antrieb mit einer Verschlussklappe kombiniert wird, der über einen Signalaustausch mit dem Füllstand der Anlage und einer Abfrage der Roboterposition verknüpft ist. Die Betankung des Systems lässt sich somit automatisieren. Es muss kein Mitarbeiter in den Sicherheitsbereich des Roboters eindringen, d. h. die effektive Anlagenverfügbarkeit ist dann höher und es kann eine höhere Ausbringung erzielt werden. Zudem werden die Kosten für eine manuelle Tätigkeit des Befüllvorgangs eingespart. Das System kann über einen längeren Zeitraum, z. B. eine ganze Schicht autark betrieben werden. Die Bevorratung und die Pufferung sind in einem Modul verbaut, so dass die Pufferstrecke automatisch über eine Orientierungseinheit, z. B. einen Sortierteller, befüllt wird.

Gegenstand der Erfindung ist eine an einem Fügeroboter angeordnete Vorrichtung zur Bevorratung und Vereinzelung von Fügeelementen, umfassend mindestens ein Vereinzelungsmodul mit einem Vorratsbehälter für Fügeelemente und einer Orientierungsvorrichtung für im Vorratsbehälter befindliche Fügeelemente, eine Pufferstrecke, in der die orientierten Fügeelemente hintereinander aufgereiht werden, und eine an die Pufferstrecke angeschlossene Ausgabevorrichtung, die als Kreisring mit zwei um 180° gegeneinander versetzten Nietnestern, die zur Aufnahme eines einzelnen Fügeelements aus der Pufferstrecke eingerichtet sind, ausgeführt ist, wobei die Ausgabevorrichtung an einander entgegengesetzten Enden zwei Schlauchabgänge zu zwei unterschiedlichen Fügewerkzeugen des Fügeroboters aufweist.

In einer bevorzugten Ausführungsform der Vorrichtung ist der Kreisring in der Arbeitsposition der Vorrichtung horizontal angeordnet. In einer Ausführungsform handelt es sich um einen horizontalen Drehteller, welcher als rotierbares Kreissegment (Kreisringteller) in der Ausgabeeinheit ausgeführt wird. Dem Kreisring der Ausgabeeinheit werden Fügeelemente selektiv und einzeln zugeführt. Der Drehteller hat dazu zwei Nietaufnahme-Nuten, die bei 0° und 180° des Kreisrings angeordnet sind. Das Innensegment im Kreisring-Drehteller ist starr. Dies ist wichtig, um das Fügeelement verliersicher zu transportieren, z. B. in eine mit dem Kreisring in Verbindung stehende Nietgasse oder einen Zuführschlauch zu überführen. Das vereinzelte Fügeelement kann so trotz Positionswechsel durch die schwenkende Roboterachse sicher gehandhabt werden.

In einer vorteihaften Ausführungsform der Vorrichtung steht die Ausgabevorrichtung mit einem Zuführschlauch in Verbindung, über den Fügeelemente zu einem Fügewerkzeug des Fügeroboters transportiert werden. Der SchlauchAnschluss kann dabei variabel nach links oder nach rechts führen. Theoretisch könnten auch zwei Schlauchanschlüsse, also rechts und links ausgeführt werden. Diese Ausführungsform kommt zum Einsatz, wenn zwei unterschiedliche Fügezangen bedient werden. Das könnte der Fall sein, wenn zwei Fügezangen am Roboter gedockt werden.

Das Vereinzelungsmodul der erfindungsgemäßen Vorrichtung umfasst vorzugsweise eine Orientierungsvorrichtung für im Vorratsbehälter befindliche Fügeelemente. Als Orientierungsvorrichtungen können beispielsweise Trommelvereinzeler oder Linearförderer eingesetzt werden.

In einer vorteilhaften Ausführungsform der Vorrichtung ist die Orientierungsvorrichtung ein Trommelvereinzeler. Um die Fügeelemente von einem ungeordneten Zustand in einen geordneten Zustand zu bringen, haben sich besonders Trommelvereinzeler als vorteilhaft erwiesen. Dabei wird die Trommel dazu benutzt, die Fügeelemente in Bewegung zu bringen und an einer Austrittstrecke aufreihen zu können. Zur Drehung der Trommel wird ein beliebiger Antrieb verwendet, meistens aber ein elektrischer Antriebsmotor.

In einer bevorzugten Ausführungsform der Vorrichtung beschreibt die Pufferstrecke zwischen dem Ausgang der Orientierungseinheit und dem Eingang der Ausgabeeinheit einen Bogen. In einer speziellen Ausführungsform beschreibt die Pufferstrecke einen Bogen von 90°.

In einer vorteihaften Ausführungsform wird die Nietzuführung vom Kompaktvereinzeler zur Ausgabeeinheit bzw. dann dem Schlauchabgang über einen 90° (Winkel-) Bogen realisiert, so dass dadurch einfach der Schlauchabgang ohne komplexe konstruktive Verbindungen und Verformungen an der Ausgabeeinheit montiert werden kann, da eine passende Umlenkung der zugeführten Niete durch den Bogen selbst erfolgt. Ferner befindet sich der Kompaktvereinzeler am Roboter in einer gut befüllbaren Position (Ausrichtung nach oben). Damit werden die Nachteile der aus dem Stand der Technik bekannten linearen Zuführung, wie bspw. schlechte Befüllbarkeit der Pufferstrecke im Bereich Ausgabeeinheit der linearen Anordnung, gelöst. Durch die Anordnung der Pufferstrecke im 90°-Bogen kann die Pufferung platzsparender erfolgen als bei den bisher bekannten Pufferstrecken. Zudem kann über den 90°-Bogen ein günstiger Abgang des Zuführschlauchs zur Fügezange realisiert werden, weil der Schlauchanschluss damit in Richtung der Roboterachse geleitet werden kann.

In einer bevorzugten Ausführungsform umfasst die erfindungsgemäße Vorrichtung mindestens zwei Vereinzelungsmodule. Damit können parallel mehrere unterschiedliche Fügeelemente an einem Abgang zur Fügezange gekoppelt werden. Es lassen sich so unterschiedliche Arten von Fügeelementen in einer einzigen Vorrichtung verarbeiten, beispielsweise Niete unterschiedlicher Geometrien, z. B. unterschiedlicher Längen von z. B. 2,5 bis 14 mm, beispielsweise 3,5 bis 8 mm.

In einer vorteilhaften Ausführungsform umfasst die Ausgabeeinheit mindestens zwei Drehteller, die durch Rotation der Kreisringe in der Ausgabeeinheit passend ein jeweils einem Drehteller zugeführtes Fügeelement dem Schlauchabgang der Ausgabeeinheit zuführen. Die Ausgabeeinheit weist mindestens zwei Kreisringe auf, die über eine Nietgasse, die zum Transport von Fügeelementen eingerichtet ist, miteinander in Verbindung stehen. Die mindestens zwei Drehteller fungieren dabei als Weichensystem und sind in Reihe schaltbar. Dies bietet den Vorteil, dass keine zusätzlichen Bauteile notwendig sind, um das System nur zur Vereinzelung oder auch als Weiche zu nutzen. Zudem ist der Bauraum deutlich kleiner als bei bisher bekannten (stationären) Systemen.

Während des Transports des Fügeelements zum Schlauchabgang müssen alle Drehteller so eingestellt sein, dass das Fügeelement freien Durchlass bekommt. Das Fügeelement wird über die Pufferstrecke in ein Nest eines Drehtellers geführt. Daraufhin wird der Drehteller um 90° gedreht, um das Nest mit der Nietgasse bzw. dem Schlauchabgang der Ausgabeeinheit zu verbinden. Das kann elektrisch oder vorzugsweise pneumatisch erfolgen. Sinnvoll ist es, dafür Anschläge zu verwenden, um die 90°-Drehung reproduzierbar ausführen zu können. Anschließend wird das Fügeelement von der Nietgasse über den Schlauchanschluss zur Fügezange transportiert. Das passiert vorzugsweise über pneumatische Druckluft.

Der Schlauchanschluss kann dabei variabel nach links oder nach rechts führen. Wie oben beschrieben, können auch zwei Schlauchanschlüsse, also rechts und links ausgeführt werden. In dieser Ausführungsform muss die Schussluft dann an einer anderen Stelle eingespeist werden, z. B. am Deckel der Nietgasse.

Um Vereinzelungsmodule zur Verarbeitung von Fügeelementen, insbesondere von Halbhohlstanznieten am Roboter einsetzen zu können, ist der Bedarf an Bauraum möglichst niedrig zu halten.

Die erfindungsgemäße Vorrichtung zeichnet sich durch ihre kompakte Bauweise aus, die eine Montage an einem Fügeroboter ermöglicht. In einer bevorzugten Ausführungsform beträgt die Breite der Vorrichtung maximal 320 mm; ihre Höhe beträgt maximal 480 mm; und ihre Tiefe maximal 230 mm. In einer vorteilhaften Ausführungsform beträgt das Gewicht der Vorrichtung weniger als 16 kg, beispielsweise weniger als 14 kg in befülltem Zustand. In einer anderen bevorzugten Ausführungsform, welche zwei Vereinzelungsmodule aufweist, beträgt das Gewicht der Vorrichtung weniger als 32 kg, beispielsweise weniger als 28 kg in befülltem Zustand. Die maximale Füllmenge des Vorratsbehälters beträgt in einer vorteilhaften Ausführungsform von 2.000 bis 10.000 Fügeelemente, abhängig von der Größe der eingesetzten Fügeelemente.

In einer bevorzugten Ausführungsform ist die Vorrichtung schwimmend am Fügeroboter gelagert. Der Kompaktvereinzeler kann so seine Position halten, obwohl sich die Position des Fügeroboters verändert.

Gegenstand der Erfindung ist auch ein Verfahren zum Betreiben einer erfindungsgemäßen Vorrichtung. Dabei werden aus dem mindestens einen Vorratsbehälter Fügeelemente der Orientierungsvorrichtung zugeführt und von ihr orientiert. Die orientierten Fügeelemente werden hintereinander in der Pufferstrecke aufgereiht Aus der Pufferstrecke wird jeweils ein einzelnes Fügeelement in ein Nest des Kreisrings der Ausgabevorrichtung überführt. Der Kreisring wird dann um einen vorgegebenen Winkel gedreht, beispielsweise um 90°, um das Nest in Verbindung mit einer Transportstrecke, z. B. einer Nietgasse oder einem Zuführschlauch, zu bringen. Dann wird das Fügeelement über einen der beiden Schlauchabgänge einem der beiden Fügewerkzeuge des Fügeroboters zugeführt, beispielsweise pneumatisch mittels Druckluft.

In einer vorteilhaften Ausführungsform des Verfahrens umfasst die Vorrichtung mindestens zwei Vereinzelungsmodule, die mit unterschiedlichen Typen von Fügeelementen befüllt sind, und die Ausgabevorrichtung ist dafür eingerichtet, jeweils ein einzelnes Fügeelement eines aus den unterschiedlichen Typen von Fügeelementen ausgewählten Typs einem Fügewerkzeug des Fügeroboters zuzuführen. In einer bevorzugten Ausführungsform weist die Ausgabevorrichtung mindestens zwei Kreisringteller auf, die in Reihe geschaltet werden können. Dadurch lassen sich wahlweise und abwechselnd unterschiedliche Typen von Fügeelementen vereinzeln und selektiv zum Fügewerkzeug des Fügeroboters transportieren, so dass dieser ohne Unterbrechung des Betriebs unterschiedliche Fügeelemente verarbeiten kann.

Weitere Vorteile und Ausgestaltungen der Erfindung ergeben sich aus der Beschreibung und den beiliegenden Zeichnungen.

Die Erfindung ist anhand von Ausführungsformen in den Zeichnungen schematisch dargestellt und wird unter Bezugnahme auf die Zeichnungen schematisch und ausführlich beschrieben. Es zeigt:
Figur 1 eine schematische perspektivische Darstellung einer Ausführungsform des erfindungsgemäßen Kompaktvereinzelers;
Figur 2 eine schematische perspektivische Darstellung eines Teils des Kompaktvereinzelers aus Fig. 1;
Figur 3 eine schematische Darstellung verschiedener Arbeitsphasen eines erfindungsgemäßen Kompaktvereinzelers.

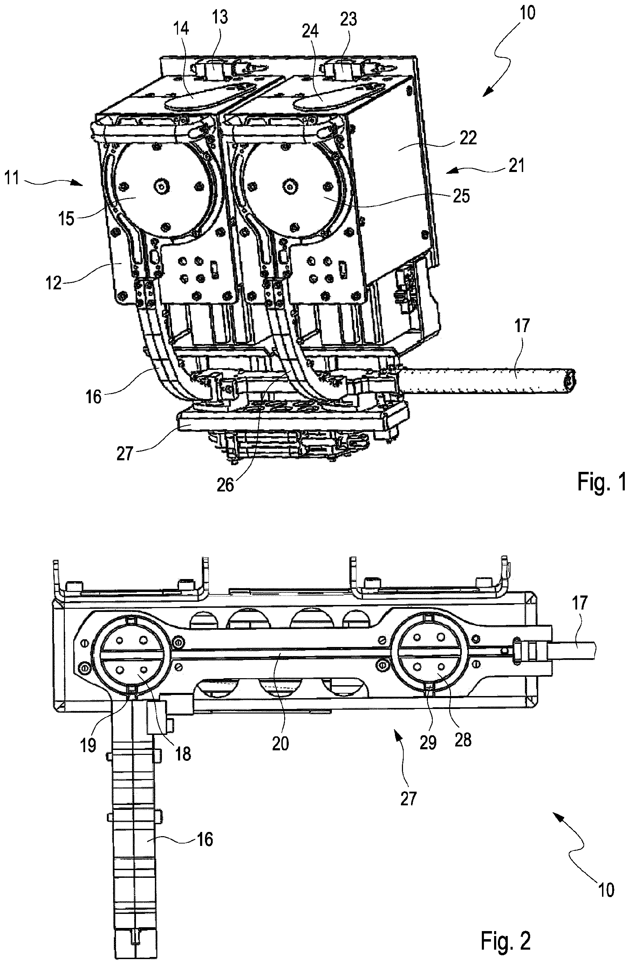

Figur 1 zeigt in perspektivischer Darstellung schematisch eine Ausführungsform des erfindungsgemäßen Kompaktvereinzelers 10 mit zwei Vereinzelungsmodulen 11 und 21. Die Vereinzelungsmodule 11 und 21 sind über Aufhängungen 13 und 23 an einer Basisplatte arretiert. Jedes Vereinzelungsmodul 11 bzw. 21 weist einen Vorratsbehälter 12 bzw. 22 für Fügeelemente auf. Die Einfüllöffnungen der Vorratsbehälter 12 und 22 sind über Klappen 14 bzw. 24 verschlossen und daher in der Zeichnung nicht sichtbar. Die in den Vorratsbehältern 12 bzw. 22 befindlichen Fügeelemente, z. B. Hohlstanzniete, werden über Trommelvereinzeler 15 bzw. 25 sortiert und in einer Pufferstrecke 16 bzw. 26 aufgereiht. Die aufgereihten Fügeelemente werden in der Ausgabeeinheit 27 bei Bedarf vereinzelt und einem Zuführschlauch 17 zugeführt, über den sie mittels Druckluft zu dem Fügewerkzeug des Fügeroboters transportiert werden.

Figur 2 zeigt eine Teilansicht derselben Ausführungsform wie Figur 1. Dargestellt sind die Ausgabeeinheit 27, die auch als Weiche für die in den beiden Vereinzelungsmodulen 11 und 21 bevorrateten Fügeelemente dient; sowie eine Pufferstrecke 16. Die übrigen Teile der Vorrichtung 10 sind weggelassen. Die Ausgabeeinheit 27 umfasst zwei als Kreisringe ausgeführte Vereinzeler 18 und 28, die jeweils zwei Nietnester 19 bzw. 29 aufweisen, die auf entgegengesetzten Seiten des Kreisrings angeordnet, also um 180° gegeneinander versetzt sind. Über die Pufferstrecke 16 kann ein einzelnes Fügeelement in das Nietnest 19 eingebracht werden. Durch eine Drehung des Drehtellers 18 um 90° wird das Fügeelement zur Nietgasse 20 transportiert und kann mittels Druckluft über den Zuführschlauch 17 zum Fügewerkzeug des Fügeroboters, z. B. einer Nietzange, transportiert werden.

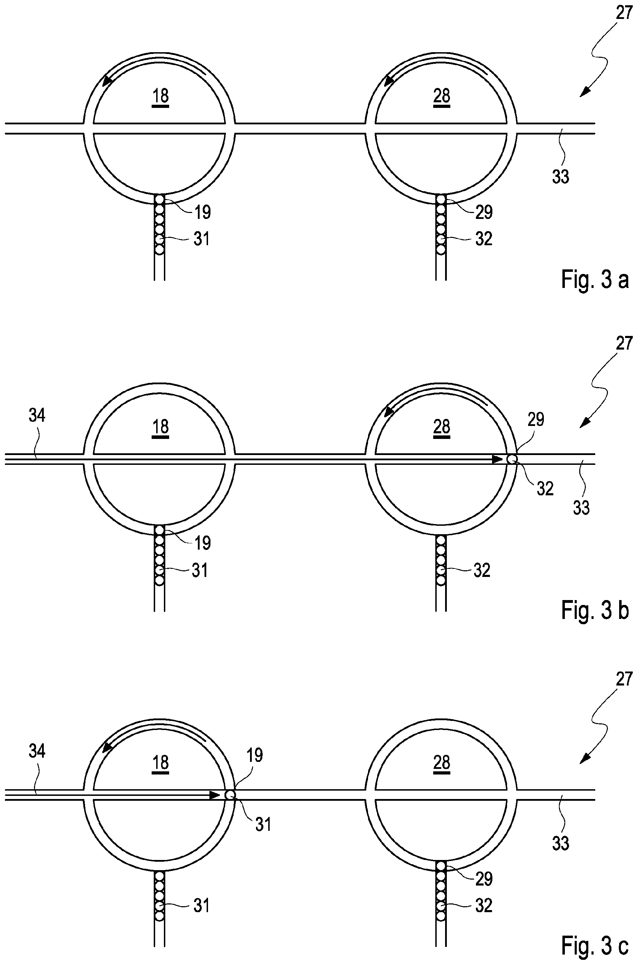

Figur 3 zeigt schematisch verschiedene Arbeitsphasen der Ausgabeeinheit 27. In Fig. 3a befindet sich die Einheit 27 in ihrer Grundposition. Dem Vereinzeler 18 werden Fügeelemente 31 eines ersten Typs A zugeführt, dem Vereinzeler 28 Fügeelemente 32 eines zweiten Typs B. In dem Nietnest der Vereinzelers 18 befindet sich ein einzelnes Fügeelement 31 des Typs A, in dem Nietnest des Vereinzelers 28 befindet sich ein einzelnes Fügeelement 32 des Typs B.

In Fig. 3b ist der Vereinzeler 28 um 90° gegenüber der Grundposition gedreht, der Vereinzeler 18 befindet sich in der Grundstellung. In dieser Position kann das Fügeelement 32 im Nietnest des Vereinzelers 28 durch einen Pneumatikstrom 34 über den Schlauchabgang 33 der Fügezange zugeführt werden.

In Fig. 3c ist der Vereinzeler 18 um 90° gegenüber der Grundposition gedreht, der Vereinzeler 28 befindet sich in der Grundstellung. In dieser Position kann das Fügeelement 31 im Nietnest des Vereinzelers 18 durch einen Pneumatikstrom 34 über den Schlauchabgang 33 der Fügezange zugeführt werden.

Pneumatikstrom 34 und Schlauchabgang 33 können auch vertauscht sein. In diesem Fall würde der Pneumatikstrom 34 in Fig. 3b und 3c jeweils von rechts kommen und der Schlauchabgang 33 wäre in den Zeichnungen auf der linken Seite.

Die Ausgabeeinheit 27 wirkt sowohl als Vereinzeler als auch als Weiche für die unterschiedlichen Typen von Fügeelementen 31 und 32. Sie kann ein Fügewerkzeug, z. B. eine Nietzange, nach Bedarf abwechselnd mit unterschiedlichen Typen von Fügeelementen versorgen, ohne dass dafür eine zusätzlich Weiche erforderlich ist. Damit können parallel mehrere unterschiedliche Fügeelemente an einem Abgang zur Fügezange gekoppelt werden.

### Bezugszeichenliste

- 10: Kompaktvereinzeler
- 11: Vereinzelungsmodul
- 12: Vorratsbehälter
- 13: Aufhängung
- 14: Klappe
- 15: Trommelvereinzeler
- 16: Pufferstrecke
- 17: Zuführschlauch
- 18: Kreisringvereinzeler
- 19: Nietnest
- 20: Nietgasse
- 21: Vereinzelungsmodul
- 22: Vorratsbehälter
- 23: Aufhängung
- 24: Klappe
- 25: Trommelvereinzeler
- 26: Pufferstrecke
- 27: Ausgabeeinheit/Weiche
- 28: Kreisringvereinzeler
- 29: Nietnest
- 31: Fügeelement Typ A
- 32: Fügeelement Typ B
- 33: Schlauchabgang zur Fügezange
- 34: Pneumatikstrom

## Patentansprüche

1. An einem Fügeroboter angeordnete Vorrichtung (10) zur Bevorratung und Vereinzelung von Fügeelementen, umfassend mindestens ein Vereinzelungsmodul (11, 21) mit einem Vorratsbehälter (12, 22) für Fügeelemente, einer Orientierungsvorrichtung (15, 25) für im Vorratsbehälter (12, 22) befindliche Fügeelemente, eine Pufferstrecke (16, 26), in der die orientierten Fügeelemente hintereinander aufgereiht werden, und eine an die Pufferstrecke (16,26) angeschlossene Ausgabevorrichtung (27), die als Kreisring (18, 28) mit zwei um 180° gegeneinander versetzten Nestern (19, 29), die jeweils zur Aufnahme eines einzelnen Fügeelements aus der Pufferstrecke (16, 26) eingerichtet sind, ausgeführt ist, **dadurch gekennzeichnet, dass** die Ausgabevorrichtung (27) an einander entgegengesetzten Enden zwei Schlauchabgänge (17, 33) zu zwei unterschiedlichen Fügewerkzeugen des Fügeroboters aufweist.

2. Vorrichtung (10) nach Anspruch 1, worin der Kreisring (19, 29) in der Arbeitsposition der Vorrichtung (10) horizontal angeordnet ist.

3. Vorrichtung (10) nach Anspruch 1 oder 2, worin die Ausgabevorrichtung (27) mit einem Zuführschlauch (17) in Verbindung steht, über den Fügeelemente zu einem Fügewerkzeug des Fügeroboters transportiert werden.

4. Vorrichtung (10) nach einem der Ansprüche 1 bis 3, worin die Orientierungsvorrichtung (15, 25) ein Trommelvereinzeler (15, 25) ist.

5. Vorrichtung (10) nach einem der Ansprüche 1 bis 4, worin die Pufferstrecke (16, 26) zwischen dem Ausgang der Orientierungseinheit (15, 25) und dem Eingang der Ausgabeeinheit (27) einen Bogen beschreibt.

6. Vorrichtung (10) nach Anspruch 5, worin die Pufferstrecke (16, 26) einen Bogen von 90° beschreibt.

7. Vorrichtung (10) nach einem der voranstehenden Ansprüche, welche mindestens zwei Vereinzelungsmodule (11, 21) umfasst.

8. Vorrichtung (10) nach Anspruch 7, bei dem die Ausgabeeinheit (27) mindestens zwei Kreisringe (18, 28) aufweist, die über eine Gasse (20), die zum Transport von Fügeelementen eingerichtet ist, miteinander in Verbindung stehen.

9. Verfahren zum Betreiben einer Vorrichtung (10) nach einem der voranstehenden Ansprüche, worin aus dem mindestens einen Vorratsbehälter (12, 22) Fügeelemente der Orientierungsvorrichtung (15, 25) zugeführt und von ihr orientiert werden; die orientierten Fügeelemente hintereinander in der Pufferstrecke (16, 26) aufgereiht werden; ein einzelnes Fügeelement in ein Nest (19, 29) des Kreisrings (18, 28) der Ausgabevorrichtung (27) überführt wird; der Kreisring (18, 28) um einen vorgegebenen Winkel gedreht wird, um das Nest (19, 29) in Verbindung mit einer Transportstrecke (17, 20) zu bringen, und das Fügeelement über einen der beiden Schlauchabgänge (17, 33) einem der beiden Fügewerkzeuge des Fügeroboters zugeführt wird.

10. Verfahren nach Anspruch 9, bei dem die Vorrichtung mindestens zwei Vereinzelungsmodule (11, 21) umfasst, die mit unterschiedlichen Typen (31, 32) von Fügeelementen befüllt sind, und die Ausgabevorrichtung (27) dafür eingerichtet ist, jeweils ein einzelnes Fügeelement eines aus den unterschiedlichen Typen (31, 32) von Fügeelementen ausgewählten Typs (31, 32) über einen der beiden Schlauchabgänge (17, 33) einem der beiden Fügewerkzeuge des Fügeroboters zuzuführen.

## Claims

1. Device (10) arranged on a joining robot for storing and separating joining elements, comprising at least one separating module (11, 21) with a reservoir (12, 22) for joining elements, an orientation device (15, 25) for joining elements located in the reservoir (12, 22), a buffer section (16, 26) in which the oriented joining elements are lined up one behind the other, and an output device (27) connected to the buffer section (16, 26), which output device is configured as a circular ring (18, 28) with two nests (19, 29) that are offset by 180° from one another and are each intended to receive an individual joining element from the buffer section (16, 26), **characterised in that** the output device (27) has at opposite ends two hose outlets (17, 33) to two different joining tools of the joining robot.

2. Device (10) according to claim 1, wherein the circular ring (19, 29) is arranged horizontally in the working position of the device (10).

3. Device (10) according to claim 1 or 2, wherein the output device (27) is connected to a feed hose (17) via which joining elements are transported to a joining tool of the joining robot.

4. Device (10) according to any one of claims 1 to 3, wherein the orientation device (15, 25) is a drum separator (15, 25).

5. Device (10) according to any one of claims 1 to 4, wherein between the output of the orientation unit (15, 25) and the input of the output unit (27) the buffer section (16, 26) describes an arc.

6. Device (10) according to claim 5, wherein the buffer section (16, 26) describes an arc of 90°.

7. Device (10) according to any one of the preceding claims, which comprises at least two separating modules (11, 21).

8. Device (10) according to claim 7, in which the output unit (27) has at least two circular rings (18, 28), which are connected to one another via a passage (20) adapted to transport joining elements.

9. Method for operating a device (10) according to any one of the preceding claims, wherein joining elements are fed from the at least one reservoir (12, 22) to the orientation device (15, 25) and oriented by it; the oriented joining elements are lined up one behind the other in the buffer section (16, 26); a single joining element is transferred into a nest (19, 29) of the circular ring (18, 28) of the output device (27); the circular ring (18, 28) is rotated through a predetermined angle in order to bring the nest (19, 29) into connection with a transport path (17, 20), and the joining element is fed via one of the two hose outlets (17, 33) to one of the two joining tools of the joining robot.

10. Method according to claim 9, in which the device comprises at least two separating modules (11, 21) which are filled with different types (31, 32) of joining elements, and the output device (27) is adapted to feed in each case a single joining element of a type (31, 32) selected from the different types (31, 32) of joining elements via one of the two hose outlets (17, 33) to one of the two joining tools of the joining robot.

## Revendications

1. Dispositif (10) agencé au niveau d'un robot d'assemblage pour le stockage et la séparation d'éléments d'assemblage, comprenant au moins un module de séparation (11, 21) avec un réservoir (12, 22) pour des éléments d'assemblage, un dispositif d'orientation (15, 25) pour des éléments d'assemblage se trouvant dans le réservoir (12, 22), un parcours tampon (16, 26), dans lequel les éléments d'assemblage orientés sont alignés les uns derrière les autres, et un dispositif de sortie (27) raccordé au parcours tampon (16, 26) qui est réalisé comme anneau circulaire (18, 28) avec deux nids (19, 29) décalés l'un contre l'autre de 180° qui sont conçus respectivement pour la réception d'un élément d'assemblage individuel à partir du parcours tampon (16, 26), **caractérisé en ce que** le dispositif de sortie (27) présente aux extrémités opposées l'une à l'autre deux sorties de tuyaux (17, 33) pour deux outils d'assemblage différents du robot d'assemblage.

2. Dispositif (10) selon la revendication 1, dans lequel l'anneau circulaire (19, 28) est agencé horizontalement dans la position de travail du dispositif (10).

3. Dispositif (10) selon la revendication 1 ou 2, dans lequel le dispositif de sortie (27) est en liaison avec un tuyau d'alimentation (17), par le biais duquel des éléments d'assemblage sont transportés vers un outil d'assemblage du robot d'assemblage.

4. Dispositif (10) selon l'une quelconque des revendications 1 à 3, dans lequel le dispositif d'orientation (15, 25) est un dispositif de séparation à tambour (15, 25).

5. Dispositif (10) selon l'une quelconque des revendications 1 à 4, dans lequel le parcours tampon (16, 26) décrit un arc entre la sortie de l'unité d'orientation (15, 25) et l'entrée de l'unité de sortie (27).

6. Dispositif (10) selon la revendication 5, dans lequel le parcours tampon (16, 26) décrit un arc de 90°.

7. Dispositif (10) selon l'une quelconque des revendications précédentes, qui comporte au moins deux modules de séparation (11, 21).

8. Dispositif (10) selon la revendication 7, dans lequel l'unité de sortie (27) présente au moins deux anneaux circulaires (18, 28) qui sont en liaison l'un avec l'autre par le biais d'un passage (20) qui est conçu pour le transport d'éléments d'assemblage.

9. Procédé de fonctionnement d'un dispositif (10) selon l'une quelconque des revendications précédentes, dans lequel des éléments d'assemblage du dispositif d'orientation (15, 25) sont fournis à partir de l'au moins un réservoir (12, 22) et orientés par celui-ci ; les éléments d'assemblage orientés sont alignés les uns derrière les autres dans le parcours tampon (16, 26) ; un élément d'assemblage individuel est transféré dans un nid (19, 29) de l'anneau circulaire (18, 28) du dispositif de sortie (27) ; l'anneau circulaire (18, 28) est tourné autour d'un angle prédéfini afin d'amener le nid (19, 29) en liaison avec un parcours de transport (17, 20), et l'élément d'assemblage est fourni par le biais d'une des deux sorties de tuyau (17, 33) à l'un des deux outils d'assemblage du robot d'assemblage.

10. Procédé selon la revendication 9, dans lequel le dispositif comporte au moins deux modules de séparation (11, 21) qui sont remplis de types différents (31, 32) d'éléments d'assemblage, et le dispositif de sortie (27) est conçu afin de fournir respectivement un élément d'assemblage individuel d'un type (31, 32) sélectionné à partir des différents types (31, 32) d'éléments d'assemblage par le biais d'une des deux sorties de tuyau (17, 33) à l'un des deux outils d'assemblage du robot d'assemblage.
